(19) **Europäisches Patentamt / European Patent Office / Office européen des brevets**

(11) **EP 2 716 045 B1**

(12) # FASCICULE DE BREVET EUROPEEN

(45) Date de publication et mention de la délivrance du brevet:
**08.12.2021  Bulletin 2021/49**

(21) Numéro de dépôt: **12731046.4**

(22) Date de dépôt: **23.05.2012**

(51) Int Cl.:
*H04N 19/103* *(2014.01)*    *H04N 19/105* *(2014.01)*
*H04N 19/12* *(2014.01)*    *H04N 19/147* *(2014.01)*
*H04N 19/176* *(2014.01)*    *H04N 19/19* *(2014.01)*
*H04N 19/196* *(2014.01)*    *H04N 19/46* *(2014.01)*
*H04N 19/513* *(2014.01)*    *H04N 19/547* *(2014.01)*
*H04N 19/567* *(2014.01)*    *H04N 19/61* *(2014.01)*

(86) Numéro de dépôt international:
**PCT/FR2012/051158**

(87) Numéro de publication internationale:
**WO 2012/160313 (29.11.2012 Gazette 2012/48)**

(54) **PROCÉDÉ DE CODAGE ET DE DÉCODAGE D'IMAGES, DISPOSITIF DE CODAGE ET DE DÉCODAGE D'IMAGES ET PROGRAMMES D'ORDINATEUR CORRESPONDANTS**

VERFAHREN, VORRICHTUNG UND COMPUTERPROGRAMME ZUR ENKODIERUNG UND DEKODIERUNG VON BILDERN

METHOD, APPARATUS AND COMPUTER PROGRAMS FOR ENCODING AND DECODING OF IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **26.05.2011  FR 1154595**

(43) Date de publication de la demande:
**09.04.2014  Bulletin 2014/15**

(60) Demande divisionnaire:
**21204503.3**
**21204509.0**

(73) Titulaire: **ORANGE**
**92130 Issy-les-Moulineaux (FR)**

(72) Inventeurs:
• **THIESSE, Jean-Marc**
  **92210 SAINT-CLOUD (FR)**
• **JUNG, Joël**
  **F-78320 Le Mesnil Saint Denis (FR)**
• **ANTONINI, Marc**
  **F-06903 Sophia Antipolis Cedex (FR)**

(56) Documents cités:
**WO-A1-2011/061089**

• DAVIES (BBC) T ET AL: "Suggestion for a Test Model", 1. JCT-VC MEETING; DRESDEN; (JOINT COLLABORATIVE TEAM ON VIDEO CODING OF ISO/IEC JTC1/SC29/WG11 AND ITU-TSG.16 ), 7 mai 2010 (2010-05-07), XP030007526,
• PENG YIN ET AL: "Localized Weighted Prediction for Video Coding", CONFERENCE PROCEEDINGS / IEEE INTERNATIONAL SYMPOSIUM ON CIRCUITS AND SYSTEMS (ISCAS), 23 mai 2005 (2005-05-23), pages 4365-4368, XP010816640, IEEE SERVICE CENTER, PISCATAWAY, NJ, USA DOI: 10.1109/ISCAS.2005.1465598 ISBN: 978-0-7803-8834-5
• JINGJING DAI ET AL: "Motion vector coding based on predictor selection and boundary-matching estimation", IEEE INTERNATIONAL WORKSHOP ON MULTIMEDIA SIGNAL PROCESSING (MMSP '09), 5 octobre 2009 (2009-10-05), pages 1-5, XP031550846, IEEE, PISCATAWAY, NJ, USA ISBN: 978-1-4244-4463-2 cité dans la demande

- STEINBACH E ET AL: "Using multiple global motion models for improved block-based video coding", IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA, vol. 2, 24 October 1999 (1999-10-24), pages 56-60, XP010369069, DOI: 10.1109/ICIP.1999.822854 ISBN: 978-0-7803-5467-8

## Description

### Domaine de l'invention

La présente invention se rapporte de manière générale au domaine du traitement d'images, et plus précisément au codage et au décodage par compétition d'images numériques et de séquences d'images numériques.

Plus précisément, l'invention s'applique à la compression d'images ou de séquences vidéo utilisant une représentation par blocs de la séquence vidéo.

L'invention peut notamment, mais non exclusivement, s'appliquer au codage vidéo mis en œuvre dans les codeurs vidéo actuels et de leurs amendements (MPEG, H.264, H.264 SVC, H.264 MVC, etc) ou à venir (ITU-T/VCEG (H.265) ou ISO/MPEG (HVC)), et au décodage correspondant.

### Art antérieur

Les images et séquences d'images numériques occupent beaucoup d'espace en termes de mémoire, ce qui nécessite, lorsqu'on transmet ces images, de les compresser afin d'éviter les problèmes d'encombrement sur le réseau de communication utilisé pour cette transmission, le débit utilisable sur celui-ci étant généralement limité. Cette compression est également souhaitable en vue du stockage de ces données.

On connaît déjà de nombreuses techniques de compression de données vidéo. Parmi celles-ci, de nombreuses techniques de codages vidéo, notamment la technique H.264, utilisent des techniques de prédiction spatiale ou temporelle de groupes de blocs de pixels d'une image courante par rapport à d'autres groupes de blocs de pixels appartenant à la même image ou à une image précédente ou suivante.

Plus précisément, selon la technique H.264, des images I sont codées par prédiction spatiale (prédiction intra), et des images P et B sont codées par prédiction temporelle (prédiction inter) par rapport à d'autres images I, P ou B codées/décodées à l'aide d'une compensation en mouvement.

De telles images sont découpées généralement en macroblocs, eux-mêmes découpés en partitions comprenant un ensemble de pixels (par exemple 8x8). Pour chaque partition est codée une partition résiduelle, encore appelée résidu de prédiction, correspondant à la partition originale diminuée d'une prédiction. Après ce codage prédictif, les partitions résiduelles sont transformées par une transformée de type transformée en cosinus discrète (DCT), puis quantifiées. Les coefficients des partitions résiduelles quantifiées sont ensuite parcourus dans un ordre de lecture permettant d'exploiter le nombre important de coefficients nuls dans les hautes fréquences, puis codées par un codage entropique.

Conformément à l'invention, une partition peut consister en un bloc de forme généralement carrée ou rectangulaire, ou bien avoir d'autres formes, telle que linéaire, en forme de L, etc.... Une partition selon l'invention peut également avoir une forme tout à fait arbitraire.

Selon la technique H.264 par exemple, lorsqu'un macrobloc est découpé en blocs, un signal de données, correspondant à chaque bloc, est transmis au décodeur. Un tel signal comprend :

- des données résiduelles qui sont les coefficients des blocs résiduels quantifiés et éventuellement, lors d'un codage en mode Inter, des données résiduelles des vecteurs mouvement,
- des paramètres de codage qui sont représentatifs du mode de codage utilisé, en particulier:

  • le mode de prédiction (prédiction intra, prédiction inter, prédiction par défaut réalisant une prédiction pour laquelle aucune information n'est transmise au décodeur (« en anglais « skip »)) ;
  • des informations précisant le type de prédiction (orientation, image de référence, ...) ;
  • le type de partitionnement ;
  • le type de transformée, par exemple DCT 4x4, DCT 8x8, etc...
  • les informations de mouvement si nécessaire ;
  • etc.

Le décodage est fait image par image, et pour chaque image, macrobloc par macrobloc. Pour chaque partition d'un macrobloc, les éléments correspondants du signal sont lus. La quantification inverse et la transformation inverse des coefficients des blocs sont effectuées. Puis, la prédiction de la partition est calculée et la partition est reconstruite en ajoutant la prédiction au résidu de prédiction décodé.

Le codage intra ou inter par compétition, tel que mis en œuvre dans la norme H264, repose ainsi sur la mise en compétition de différents paramètres de codage, tels que ceux précités, dans le but de sélectionner le meilleur mode de codage, c'est-à-dire celui qui optimisera le codage de la partition considérée selon un critère de performance prédéterminé, par exemple le coût débit/distorsion bien connu de l'homme du métier.

Les paramètres de codage relatifs au mode de codage sélectionné sont contenus dans le signal de données transmis par le codeur au décodeur, sous la forme d'identifiants appelés généralement indices de compétition. Le décodeur est ainsi capable d'identifier le mode de codage sélectionné au codeur, puis d'appliquer la prédiction conforme à ce mode.

La bande passante allouée à ces indices de compétition n'est pas négligeable, puisqu'elle atteint au minimum environ 30%. Elle tend par ailleurs à augmenter en raison de l'apport toujours grandissant de nouveaux paramètres de codage tels que de nouvelles dimensions de partitions, de nouvelles formes de partitions, de nouveaux paramètres de prédiction Intra, etc....

Plusieurs solutions ont été proposées pour tenter de réduire le coût de signalisation de tels indices.

Dans le document J.-M. Thiesse, J. Jung, M. Antonini, "Data Hiding of motion informations in chroma and luma samples", ICIP, Hong Kong, Sep. 2010, il est proposé d'utiliser des techniques de marquage afin de réduire le coût de codage d'informations de signalisation résultantes d'une amélioration du codage Inter. L'idée principale est de cacher des indices de signalisation de codage dans les coefficients transformés et quantifiés de chrominance et de luminance judicieusement sélectionnés. Afin de minimiser l'erreur de prédiction, la modification est réalisée à l'aide d'une optimisation débit-distorsion. L'avantage d'une telle solution réside dans l'ajout d'une complexité faible au décodeur. Toutefois, le nombre d'indices de signalisation cachés est limité dans le but de ne pas entraîner une dégradation trop importante de la prédiction.

Dans le document Jingjing Dai; Au, O.C.; Wen Yang; Chao Pang; Feng Zou; Yu Liu; "Motion vector coding based on predictor selection and boundary-matching estimation", Multimedia Signal Processing, 2009-MMSP '09. pp.1-5, 5-7 Oct. 2009, il est proposé, lors du codage d'une partition courante, de sélectionner par compétition au moins un prédicteur de vecteur mouvement en utilisant la technique de « template matching ». Cette technique est ensuite mise en œuvre au décodeur, dans le but de ne pas transmettre dans le flux codé d'informations de mouvement dont le coût de signalisation est élevé. La technique de « template matching » consiste à comparer l'intensité des pixels de la partition courante avec l'intensité des pixels d'une ou plusieurs partitions causales déjà codées puis décodées, à sélectionner le vecteur mouvement pointant vers la partition causale dont l'intensité des pixels est la plus proche de l'intensité des pixels de la partition courante, puis à prédire le vecteur mouvement ainsi sélectionné. Un inconvénient de cette technique est que l'appariement effectué entre la partition courante et la partition causale sélectionnée est limité à une comparaison de l'intensité des pixels et ne tient pas compte d'une inadéquation de taille ou de forme par exemple, qui pourrait exister entre la partition courante à coder (respectivement à décoder) et la partition causale. Par ailleurs, les partitions causales mises en compétition selon cette technique sont toujours celles situées dans certaines directions prédéterminées par rapport à la partition courante à coder, c'est-à-dire généralement au dessus et à gauche de la partition courante. Il en résulte une prédiction peu précise de la partition courante qui entraîne des erreurs non négligeables lors du codage (respectivement du décodage) de la partition courante.

Dans le document Laroche, G.; Jung, J.; Pesquet-Popescu, B.; "Intra Coding with Prediction Mode Information Inference," Circuits and Systems for Video Technology, IEEE Transactions on circuits and systems for video technology, vol.20, n °12, pp 1786-1796, December 2010, il est proposé, lors du codage Intra d'une partition courante de supprimer, préalablement à la mise en compétition d'un ensemble de prédicteurs Intra prédéterminés, un ou plusieurs prédicteurs Intra redondants de cet ensemble. Une telle suppression répond à un critère d'élimination prédéterminé qui ne dépend pas de l'image originale à coder et qui par conséquent est reproductible au niveau du décodeur. Un tel procédé permet certes d'utiliser moins de prédicteurs Intra pour le codage d'une partition courante mais ne permet toutefois ni d'annuler complètement le coût de signalisation, ni de tenir compte de l'ajout de nouveaux prédicteurs.

Le document Peng Yin et al: "Localized Weighted Prédiction for Video Coding", Conférence Proceedings / IEEE International Symposium on Circuits and Systems (ISCAS), 23 mai 2005 (2005-05-23), pages 4365-4368, XP010816640, IEEE Service Center Piscataway, NJ, USA DOI: 10.1109 /ISCAS.2005.1465598 ISBN: 978-0-7803-8834-5 décrit un procédé de codage et de décodage basée sur une prédiction de mouvement enrichie par un « warping ». Plusieurs images de référence résultant d'une déformation (warping) de l'image précédemment codée et décodée (donc causale) sont générées par le codeur. Des modèles de mouvement affines sont utilisés comme paramètres de déformation, et une estimation de mouvement d'un bloc de l'image courante est effectuée à l'aide d'une mise en correspondance de blocs.

Objet et résumé de l'invention

Un des buts de l'invention est de remédier à des inconvénients de l'état de la technique précité.

A cet effet, un objet de la présente invention concerne un procédé de codage selon la revendication 1.

Une telle disposition permet ainsi, lors d'un codage par compétition, qu'il soit de type Intra ou de type Inter, d'éviter d'inclure dans le signal à transmettre au décodeur, le ou les indices de compétition calculés après mise en compétition de multiples paramètres de codage. Il en résulte ainsi une diminution non négligeable du coût de signalisation, dans la mesure où une telle disposition est reproductible au niveau du décodeur.

Une telle disposition permet en outre, pour un paramètre de codage d'un type fixé, d'augmenter le nombre de paramètres du même type ou d'un type semblable susceptibles d'être mis en compétition. Dans le cas par exemple du codage Intra 8x8 ou 4x4 selon la norme H.264, pour lequel neuf prédicteurs spatiaux peuvent être mis en compétition, l'invention permet d'ajouter aisément d'autres prédicteurs spatiaux lors de la mise en compétition, sans pour cela détériorer le débit et tout en améliorant par conséquent la reconstruction de l'image.

Selon un autre mode de réalisation particulier, l'étape de sélection de partition causale consiste à :

- déterminer une pluralité de partitions causales,
- calculer au moins un paramètre de codage optimal associé à chacune des partitions causales selon le critère de performance de codage prédéterminé,
- calculer au moins un paramètre de codage optimal associé à la partition courante selon le critère de performance de codage prédéterminé,

- comparer le paramètre de codage optimal déterminé en association avec la partition courante avec chacun des paramètres de codage optimaux déterminés respectivement en association avec chacune des partitions causales,
- sélectionner la partition causale dont le paramètre de codage optimal a la valeur la plus proche de celle du paramètre de codage optimal de la partition courante.

Une telle disposition permet de réaliser une sélection de partition causale plus rigoureuse et plus précise que la sélection par défaut de l'art antérieur qui utilise un algorithme de mise en correspondance de blocs basé uniquement sur les corrélations des pixels.

Grâce à une telle disposition, il est ainsi possible de sélectionner une partition causale la plus ressemblante possible de la partition courante non seulement en termes de texture, mais également en termes de mode de codage ou d'autres critères représentatifs.

Une telle partition causale peut être localisée dans l'image courante ou bien dans une autre image précédemment codée puis décodée.

De façon plus générale, la partition causale peut se trouver dans n'importe quelle couche disponible au moment du codage de la partition courante. Notamment, la partition causale peut se trouver dans une couche de qualité de base -dite « baselayer » en anglais- ou bien une couche de raffinement en qualité -dite « enhancement layer » en anglais-, dans le cas de codage vidéo scalable (en anglais « Scalable Video Coding »). Elle peut aussi se trouver dans une couche correspondant à une autre vue dans le cas de codage vidéo multivues ( en anglais « Multiview Video Coding »).

Il convient de noter qu'après sélection d'au moins une partition causale, il est procédé à la détermination d'un paramètre de mouvement définissant le mouvement entre la partition courante à coder et la partition causale sélectionnée.

Selon un mode de réalisation préféré de l'invention, un tel paramètre de mouvement n'est pas nécessairement transmis dans le flux codé à destination du décodeur, en particulier dans le cas où celui-ci est capable de recalculer lui-même ce paramètre.

En variante, un tel paramètre de mouvement est transmis dans le flux codé à destination du décodeur qui n'aura plus qu'à le lire.

Un tel paramètre de mouvement consiste par exemple en un vecteur mouvement pointant vers la partition causale sélectionnée. Un tel vecteur est par exemple calculé à partir d'au moins un vecteur mouvement associé à une autre partition causale qui est voisine de la partition causale sélectionnée.

Selon encore un autre mode de réalisation particulier, la partition courante est codée à l'aide d'au moins deux paramètres de codage optimaux de type différent.

Une telle disposition permet de coder plus finement la partition courante puisqu'il est fait appel à deux paramètres de codage de type différents, sélectionnés tous les deux de façon optimale. Par exemple, il pourrait s'agir d'un premier paramètre optimisant la prédiction Intra d'une partition causale et d'un deuxième paramètre optimisant le sous-échantillonnage des résidus transformés et quantifiés de la prédiction dune autre partition causale.

Le nombre de paramètres de codage optimaux susceptibles d'être déterminés peut bien sûr être supérieur à deux, la précision du codage d'une partition courante étant augmentée en fonction du nombre de paramètres de codage optimaux utilisés.

Selon un autre mode de réalisation particulier, le critère de performance de codage est choisi parmi au moins un critère appartenant au groupe comprenant :

- un critère débit-distorsion, où le débit est calculé par simulation,
- un critère de distorsion.

Selon encore un autre mode de réalisation particulier, la partition causale sélectionnée est issue d'une transformation géométrique préalable, un indice associé à cette transformation étant alors codé.

Une telle disposition a pour but de déformer une partition causale préalablement sélectionnée selon l'invention de façon à optimiser l'adéquation de taille et de forme de cette dernière avec la partition courante à coder.

Une telle transformation consiste par exemple en l'application d'une rotation, d'une symétrie, etc...à la partition causale, le type de transformation géométrique étant associé à un indice destiné à être transmis dans le flux de données à destination du décodeur.

Une telle disposition permet ainsi d'affiner encore davantage l'optimisation de la prédiction, ce qui entraîne une augmentation de la qualité de l'image à reconstruire, moyennant une augmentation faible du coût de codage (en anglais "bitrate"), puisqu'un seul bit est généralement affecté à l'indice de transformation géométrique.

L'invention concerne également un dispositif de codage selon la revendication 5.

L'invention concerne également un procédé de décodage selon la revendication 8.

Un avantage d'un tel procédé de décodage réside dans le fait que les opérations de détermination de paramètre de mouvement et de calcul de paramètre de codage optimal qui ont lieu au codage sont reproductibles au décodage. Il est ainsi possible de ne transmettre dans le signal de données reçu au décodeur, ni l'indice associé au paramètre de mouvement, ni l'indice associé au paramètre de codage optimal, ce qui réduit notablement le coût de signalisation de tels indices. Comme cela a été mentionné plus haut en relation avec le procédé de codage, les avantages de la mise en compétition de n'importe quels types de paramètres de codage appliquée à la partition causale décodée sont les mêmes que ceux procurés au codage et permettent au décodage d'obtenir une reconstruction de la partition courante et, au final de l'image, qui est de meilleure qualité.

Selon un mode de réalisation particulier, la détermination du paramètre de mouvement est effectuée par calcul ou bien par lecture de ce dernier dans le signal de données.

Selon une première alternative pour laquelle aucun indice de paramètre de mouvement n'est ajouté au signal à transmettre au décodeur, il est procédé de façon autonome au décodage à un calcul du paramètre de mouvement associé à la partition courante à reconstruire qui est identique à celui effectué au codage.

Selon une seconde alternative légèrement plus coûteuse en terme de signalisation que la première alternative et pour laquelle au moins un indice de paramètre de mouvement est ajouté au signal à transmettre au décodeur, il est procédé au décodage à la lecture du paramètre de mouvement associé à la partition courante à reconstruire par simple extraction du paramètre de mouvement contenu dans le signal reçu.

Selon un autre mode de réalisation particulier, le paramètre de mouvement est un vecteur mouvement pointant vers la partition causale, un tel vecteur mouvement étant calculé à partir d'au moins un vecteur mouvement de référence qui est associé à une autre partition causale qui est voisine de la partition causale.

En application de la norme H264/AVC, l'autre partition causale est la plus proche voisine de la partition causale pointée par le vecteur mouvement. On parle alors de partition colocalisée. Dans ce cas, ledit vecteur mouvement est égal au vecteur mouvement de référence associé à cette autre partition causale. Selon une variante, ledit vecteur mouvement est égal à un médian d'une pluralité de vecteurs mouvement associés respectivement à une pluralité de partitions de causales sélectionnées comme étant les plus proches voisines de la partition causale pointée par le mouvement.

Selon encore un autre mode de réalisation particulier, la partition courante est reconstruite à l'aide d'au moins deux paramètres de codage optimaux de type différent qui sont utilisés en tant que paramètres de décodage de la partition courante.

Selon encore un autre mode de réalisation particulier, le critère de performance de codage est choisi parmi au moins un critère appartenant au groupe comprenant :

- un critère débit-distorsion, où le débit est calculé par simulation,
- un critère de distorsion.

Le choix de tels critères de performance de codage permet d'optimiser la qualité de reconstruction de l'image.

Selon encore un autre mode de réalisation particulier, la partition causale est issue d'une transformation géométrique préalable, le décodage de ladite partition causale étant effectué par lecture dans le signal d'un indice relatif à la transformation géométrique.

Comme cela a été mentionné plus haut en relation avec le procédé de codage, une telle disposition permet d'optimiser le choix de la partition causale utilisée lors de la reconstruction de la partition courante et donc d'augmenter la qualité de l'image à reconstruire, moyennant une augmentation faible du coût de codage (en anglais "bitrate"), puisqu'un seul bit est affecté à l'indice de transformation géométrique.

De façon correspondante, l'invention concerne aussi un dispositif de décodage selon la revendication 13.

L'invention concerne encore un programme d'ordinateur comportant des instructions pour mettre en œuvre l'un des procédés selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre de l'un des procédés selon l'invention, tels que décrits ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le procédé de décodage, le dispositif de codage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture d'un mode de réalisation préféré décrits en référence aux figures dans lesquelles:

- la figure 1 représente des étapes du procédé de codage selon l'invention,
- la figure 2 représente un mode de réalisation d'un dispositif de codage selon l'invention,
- la figure 3 représente un mode de réalisation d'un dispositif de décodage selon l'invention,
- la figure 4 représente des étapes du procédé de décodage selon l'invention,
- la figure 5A représente un exemple de détermination de prédicteurs Intra optimaux,
- la figure 5B représente un exemple de détermination de prédicteurs Inter optimaux,
- la figure 6 représente différents prédicteurs spatiaux,
- la figure 7 représente un exemple de détermination de deux paramètres de codage de type différent.

Description détaillée du principe général de l'invention

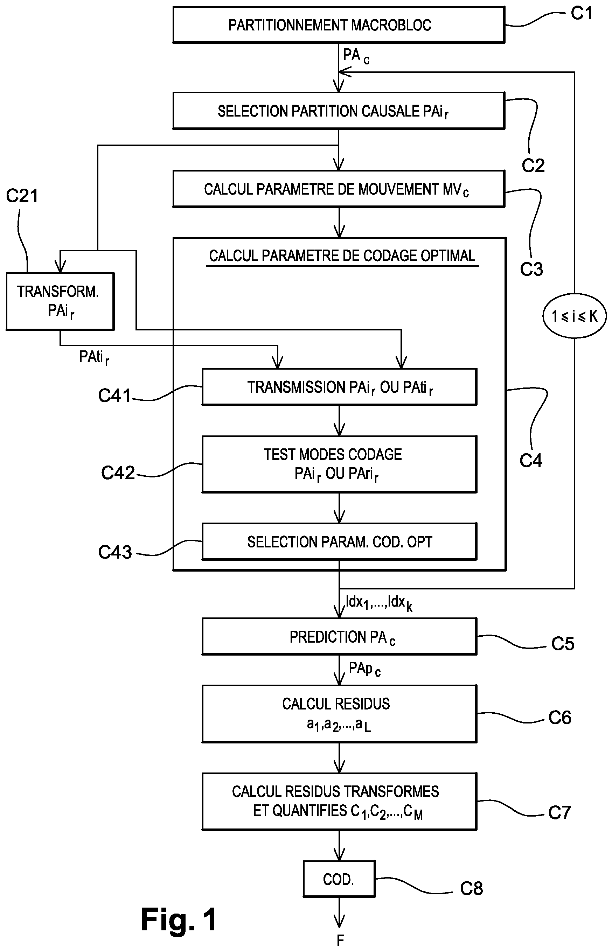

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C8, représentées à la **figure 1.**

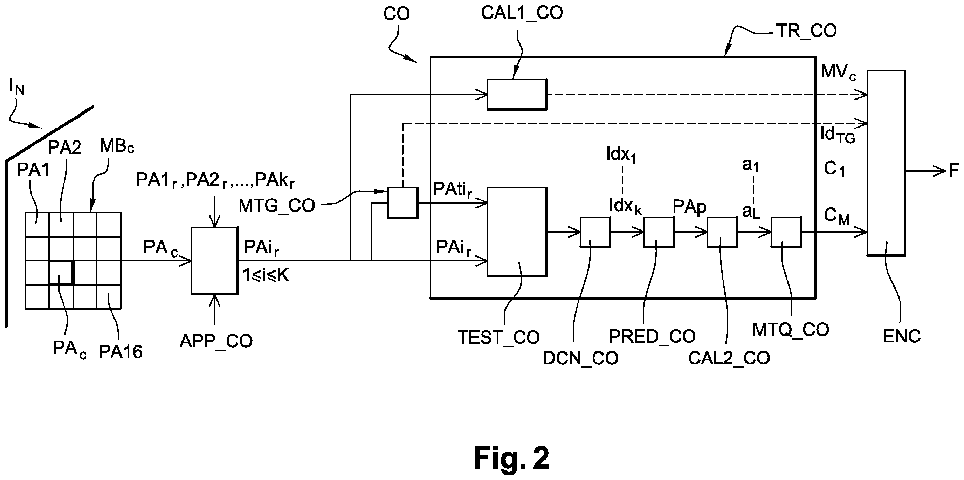

Selon le mode de réalisation de l'invention, le procédé de codage selon l'invention est implémenté dans un dispositif de codage CO représenté à la **figure 2.**

Au cours d'une première étape C1, il est procédé au découpage préalable d'un macrobloc courant $MB_c$ d'une image $I_N$ en une pluralité de partitions PA1, PA2,..., PAn comme représenté sur la **figure 2**. Une telle étape est effectuée classiquement par un module logiciel de partitionnement non représenté.

Un tel module de partitionnement utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998*). Elles ne seront donc pas décrites plus avant.

Les différents types d'algorithmes de partitionnement possibles sont regroupés dans une base de données (non représentée) du codeur CO. Ils permettent d'obtenir un découpage de l'image ou des macroblocs de cette image en une pluralité de partitions soit de forme rectangulaire ou carrée, soit d'autres formes géométriques, telles que par exemple des formes sensiblement linéaires, soit de forme tout à fait arbitraire.

Dans l'exemple représenté sur la **figure 2,** un macrobloc courant $MB_c$ de l'image courante $I_N$ est découpé en une seize partitions PA1, PA2,..., PA16. Lesdites partitions obtenues ont par exemple toutes la forme d'un bloc carré et sont toutes de même taille.

Au cours d'une étape C2 représentée à la **figure 1**, il est procédé à la sélection d'au moins une partition causale $PAi_r$ parmi une pluralité K de partitions causales disponibles $PA1_r$, $PA2_r$,..., $PAi_r$,...$PAK_r$, $(1 \leq i \leq K)$ c'est-à-dire une partition préalablement codée puis décodée, en vue du codage d'une partition courante $PA_c$ $(1 \leq c \leq n)$ de l'image courante $I_N$.

A cet effet, un module logiciel d'appariement APP_CO représenté sur la **figure 2** est adapté pour sélectionner, parmi toutes les partitions causales précitées, une première partition causale qui est la plus ressemblante possible de la partition courante $PA_c$, au moyen d'un critère classique de mise en correspondance de blocs (en anglais « block matching ») réalisée dans le domaine pixel, ou bien au moyen d'une fonction caractéristique de la partition courante $PA_c$ telle qu'une projection dans un domaine transformé ou encore dans le domaine du mode de codage de cette dernière comme cela sera décrit ultérieurement.

La partition causale sélectionnée $PAi_r$ appartient soit à une image codée puis décodée préalablement à l'image $I_N$, soit à ladite image $I_N$.

Afin d'optimiser l'adéquation de taille et de forme de la partition causale sélectionnée $PAi_r$ avec la partition courante à coder $PA_c$, il est procédé, au cours d'une étape optionnelle C21, à une déformation géométrique de ladite partition causale, en appliquant à cette dernière une transformation géométrique telle qu'une rotation, une symétrie, etc....au moyen d'un module logiciel de transformation géométrique MTG_CO bien connu en soi et tel que représenté sur la **figure 2**. A l'issue d'une telle étape, une partition causale transformée $Pati_r$ est obtenue.

Au cours d'une étape C3, il est procédé au calcul d'un paramètre de mouvement définissant le mouvement entre la partition courante PAc et la partition causale sélectionnée $PAi_r$. Un tel paramètre de mouvement est par exemple un vecteur mouvement $MV_c$.

Une telle étape est effectuée par un premier sous-module logiciel de calcul CAL1_CO appartenant à un module logiciel de traitement TR_CO, comme représenté sur la **figure 2.**

Ledit paramètre de mouvement étant une information coûteuse à signaler au décodeur, n'importe quelle méthode classique de réduction du coût de cette information peut être utilisée (Skip, prédiction de mouvement, ...).

Au cours d'une étape C4 représentée à la **figure 1**, il est procédé selon l'invention au calcul d'au moins un paramètre de codage optimal associé à ladite partition causale sélectionnée $PAi_r$ ou bien à ladite partition causale sélectionnée transformée $PAti_r$, selon un critère de performance de codage prédéterminé, par mise en compétition d'une pluralité de paramètres de codage associés à ladite partition causale sélectionnée $PAi_r$ ou bien $PAti_r$.

Au sens de l'invention, les paramètres de codage sont représentatifs du mode de codage utilisé et sont, de façon non exhaustive, du type défini ci-dessous :

- le mode de prédiction (prédiction intra, prédiction inter, prédiction par défaut réalisant une prédiction pour laquelle aucune information n'est transmise au décodeur (« en anglais « skip »)) ;
- des informations précisant le type de prédiction (orientation, image de référence, ...) ;
- le type de partitionnement ;
- le type de transformée, par exemple DCT 4x4, DCT 8×8, ondelettes, etc...
- etc.

A cet effet, au cours d'une sous-étape C41, la partition causale $PAi_r$ sélectionnée à l'étape C2 précitée ou bien la partition causale $PAti_c$ transformée à l'étape C21 précitée est transmise à un sous-module TEST_CO de test de modes de codage qui est représenté à la **figure 2.**

Au cours d'une sous-étape C42 représentée à la **figure 1**, le sous-module TEST_CO calcule les différents modes de codage possibles de la partition causale $PAi_r$ ou de la partition causale transformée $PAti_r$ considérée.

Une fois les différents modes de codage possibles testés par le sous-module de test TEST_CO, au cours d'une sous-étape C43 représentée à la **figure 1**, un sous-module de décision DCN_CO, représenté à la **figure 2,** sélectionne au moins un premier type de paramètre de codage $Idx_1$ associé à un mode de codage optimal, une telle sélection constituant la prédiction optimale selon un critère de performance prédéterminé qui, dans l'exemple représenté, est le critère débit-distorsion bien connu de l'homme du métier. Un tel critère s'exprime par l'équation (1) ci-dessous :

$$(1)\ J=D+\lambda R$$

où D représente la distorsion entre la partition originale et la partition reconstruite, R représente le coût en bits du codage des paramètres de codage et À représente un multiplicateur de Lagrange.

Selon une variante particulièrement avantageuse d'un point de vue réduction du temps de calcul au codeur, le critère de performance prédéterminé ne dépend que de la distorsion et s'exprime par l'équation (2) ci-dessous :

$$(2)\ J'=D.$$

Les critères J et J' sont calculés classiquement par simulation.

Un premier type de paramètre de codage optimal obtenu à l'issue de l'étape C43 consiste par exemple dans le mode de prédiction Inter 8x8 de la partition causale sélectionnée $PAi_r$.

Les étapes C2 à C43 précitées sont réitérées pour les K-1 autres partitions causales sélectionnées, ce qui permet d'obtenir au moins K-1 autres paramètres de codage optimaux idx2, idx3,...,idxK.

Au cours d'une étape C5 représentée à la **figure 1**, un sous-module logiciel de calcul PRED_CO, représenté à la **figure 2,** prédit la partition courante $PA_c$, à l'aide des paramètres de codage optimaux idx1 ,idx2, idx3,...,idxK sélectionnés à l'étape C43, par rapport à au moins une des partitions causales $PA1_r$, $PA2_r$,..., $PAK_r$.

A l'issue de cette étape, une partition courante prédite $PAp_c$ est délivrée.

Au cours d'une étape C6 représentée à la **figure 1**, qui n'a lieu que pour certains paramètres de codage optimaux sélectionnés, un second sous-module de calcul CAL2_CO, représenté à la **figure 2,** détermine des données résiduelles $a_1$, $a_2$, ...., $a_L$, par comparaison des données relatives à la partition courante $PA_c$ aux données relatives à la partition courante prédite obtenue $PAp_c$.

Au cours d'une étape C7 représentée à la **figure 1**, les données résiduelles $a_1$, $a_2$, ...., $a_L$, sont envoyées à un sous-module MTQ_CO de transformée et de quantification représenté à la **figure 2,** pour subir une transformée, par exemple en cosinus discrètes, puis une quantification.

On suppose que pour la partition courante prédite $PAp_c$, M données résiduelles transformées et quantifiées sont obtenues à l'issue de l'étape C7. De telles données résiduelles transformées et quantifiées sont notées par exemple $C_1$, $C_2$, ...., $C_M$.

Au cours d'une étape C8 représentée à la **figure 1**, la partition courante prédite $PAp_c$ est alors encodée avantageusement par héritage des paramètres de codage optimaux sélectionnés à l'étape C43 précitée. Un signal de données F est alors délivré à l'issue de l'étape C8.

Un tel encodage est effectué par un encodeur ENC tel que représenté à la **figure** 2. Un tel encodeur est par exemple conforme à la norme H.264/MPEG-4 AVC.

Conformément à l'invention, le signal de données F ne contient avantageusement pas les paramètres de codage optimaux sélectionnés à l'étape C43 puisque ces paramètres sont associés à des partitions causales déjà codées puis décodées et donc disponibles au décodeur. Il est donc inutile de les transmettre dans le signal de données F qui contient éventuellement :

- l'information de mouvement $MV_c$ obtenue à l'étape C3 précitée, dans le cas uniquement où le décodeur n'est pas capable de recalculer lui-même cette information,
- un indice de transformation géométrique $Id_{TG}$ tel que représenté à la **figure 2,** dans le cas uniquement où une transformation géométrique d'une partition causale a été effectuée à l'étape C21 de la **figure 1**,

- les valeurs codées des coefficients $C_1$, $C_2$, ...., $C_M$, s'ils existent.

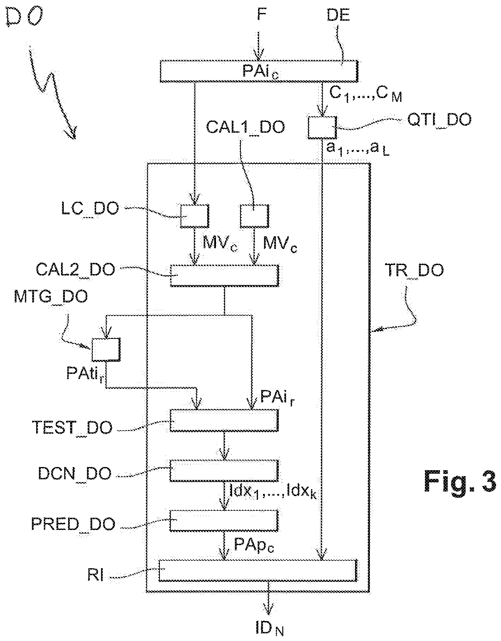

Le signal de données F est ensuite transmis au moyen d'une interface de transmission (non représentée) du codeur CO, via un réseau de communication, à un terminal distant. Celui-ci comporte un décodeur DO tel que représenté à la **figure 3.**

Le signal F est d'abord envoyé à un module logiciel de décodage entropique DE, décodage inverse de celui effectué par l'encodeur ENC représenté à la **figure 2.** Puis, pour une partition courante à reconstruire $PAi_c$, les coefficients décodés $C_1$, $C_2$, ...., $C_M$, s'ils existent, sont envoyés à un module QTI_DO de quantification inverse et de transformée inverse qui délivre les données résiduelles $a_1$, $a_2$,..., $a_L$ obtenues à l'étape de codage C6 précitée.

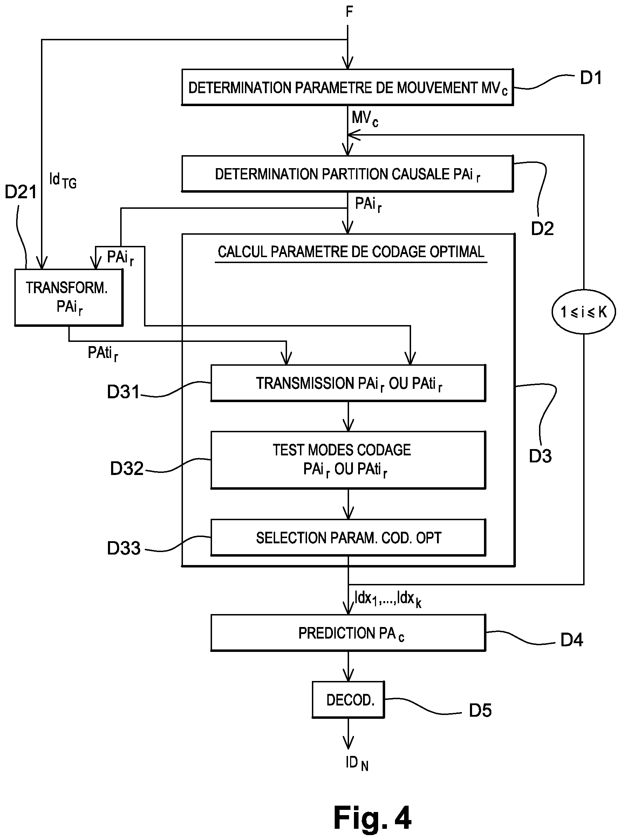

Un module logiciel de traitement TR_DO, tel que représenté à la **figure 3,** met alors en œuvre des étapes D1 à D5 du procédé de décodage selon l'invention, telle que représentées à la **figure 4.**

Un tel procédé de décodage selon l'invention est également implémenté de manière logicielle ou matérielle par modifications d'un décodeur initialement conforme à la norme H.264/MPEG-4 AVC.

Au cours d'une première étape D1 représentée à la **figure 4,** il est procédé à la détermination d'un paramètre de mouvement $MV_c$ associé à la partition courante à reconstruire $PAi_c$. Un tel paramètre de mouvement est par exemple un vecteur mouvement $MV_c$.

Dans le cas où le signal de données F ne contient pas de paramètre de mouvement, un sous-module de calcul CAL1_DO, tel que représenté sur la **figure 3,** effectue le calcul dudit vecteur mouvement $MV_c$ relatif au mouvement entre la partition courante à reconstruire $PA_c$ et une partition causale $PAi_r$.

Dans le cas où le vecteur mouvement $MV_c$ est contenu dans le signal de données F, un sous-module de lecture LC_DO lit cette information dans le signal de données F reçu.

Au cours d'une étape D2 représentée à la **figure 4,** il est procédé à la détermination de la partition causale $PAi_r$ qui est pointée par le vecteur mouvement $MV_c$ lu par le sous-module de lecture LC_DO dans le signal de données F ou bien calculé par le sous-module de lecture CAL1_DO. Une telle étape est mise en œuvre par un second sous-module de calcul CAL2_DO tel que représenté à la **figure 3.**

Dans le cas où le signal de données F contient un indice de transformation géométrique $Id_{TG}$ signalant que la partition causale $PAi_r$ a subi au codeur CO une transformation géométrique telle qu'une rotation, une symétrie, etc..., il est procédé, au cours d'une étape D21 représentée à la **figure 4,** à une déformation géométrique de ladite partition causale $PAi_r$ en appliquant à cette dernière la transformation géométrique signalée par l'indice $Id_{TG}$ au moyen d'un module logiciel de transformation géométrique MTG_DO tel que représenté sur la **figure 3** et qui est identique en tout point au module logiciel de transformation géométrique MTG_CO de la **figure 2.** A l'issue d'une telle étape, une partition causale transformée $PAti_r$ est obtenue.

Au cours d'une étape D3 représentée à la **figure 4,** il est procédé selon l'invention au calcul d'au moins un paramètre de codage optimal associé à ladite partition causale déterminée $PAi_r$ ou bien à ladite partition causale déterminée transformée $PAti_r$, selon un critère de performance de codage prédéterminé, par mise en compétition d'une pluralité de paramètres de codage associés à ladite partition causale sélectionnée.

Lesdits paramètres de codage sont du même type que ceux mentionnés plus haut dans la description du procédé de codage.

A cet effet, au cours d'une sous-étape D31 représentée à la **figure 4,** la partition causale $PAi_r$ déterminée à l'étape D2 précitée ou bien la partition causale $Pati_r$ transformée déterminée à l'étape D21 précitée est transmise à un sous-module TEST_DO de test de modes de codage qui est représenté à la **figure 3.**

Au cours d'une sous-étape D32 représentée à la **figure 4,** le sous-module TEST_DO calcule les différents modes de codage possibles de la partition causale $PAi_r$ ou de la partition causale transformée $PAti_r$ considérée.

Une fois les différents modes de codage possibles testés par le sous-module de TEST_DO, au cours d'une sous-étape D33 représentée à la **figure 4,** un sous-module de décision DCN_DO, représenté à la **figure 3,** sélectionne au moins un premier type de paramètre de codage $Idx_1$ associé à un mode de codage optimal, une telle sélection constituant la prédiction optimale selon un critère de performance prédéterminé qui, dans l'exemple représenté, est le critère débit distorsion bien connu de l'homme du métier. Un tel critère s'exprime par l'équation (1) ci-dessous :

$$(1) \quad J=D+\lambda R \text{ où}$$

D représente la distorsion entre la partition originale et la partition reconstruite, R représente le coût en bits du codage des paramètres de codage et À représente un multiplicateur de Lagrange.

Selon une variante particulièrement avantageuse d'un point de vue réduction du temps de calcul au codeur, le critère de performance prédéterminé ne dépend que de la distorsion et s'exprime par l'équation (2) ci-dessous :

$$(2) \quad J'=D.$$

Un premier type de paramètre de codage optimal obtenu à l'issue de l'étape D33 consiste par exemple dans le mode de prédiction Inter 8x8 de la partition causale déterminée $PAi_r$.

Les étapes D2 à D33 précitées sont réitérées pour K-1 autres partitions causales susceptibles d'être déterminées, ce qui permet d'obtenir au moins K-1 autres paramètres de codage optimaux idx2, idx3,...,idxK.

Au cours d'une étape D4 représentée à la **figure 4,** un sous-module logiciel de calcul PRED_DO, représenté à la **figure 3,** prédit la partition courante PAi$_c$ à reconstruire par rapport à au moins une partition causale parmi K partitions causales PA1$_r$, PA2$_r$,..., PAK$_r$ déjà codées puis décodées, à l'aide des paramètres de codage optimaux idx1,idx2, idx3,...,idxK obtenus à l'étape D33 et utilisés en tant que paramètre de décodage, et, si elles existent, les données résiduelles a$_1$, a$_2$,...,a$_L$ délivrées par le module QTI_DO de quantification inverse et de transformée inverse, tel que représenté sur la **figure 3.**

A l'issue de cette étape, une partition courante prédite PAp$_c$ est délivrée.

La partition courante prédite PAp$_c$ est ensuite décodée, au cours d'une étape D5, en ajoutant à cette dernière, si elles existent, les données résiduelles a$_1$, a$_2$,...,a$_L$ délivrées par le module QTI_DO de quantification inverse et de transformée inverse, tel que représenté sur la **figure 3.** Une telle étape est mise en œuvre au moyen d'un sous-module de reconstruction RI conforme à la norme H.264/MPEG-AVC.

Une fois toutes les partitions PA1,...,PAn de l'image I$_N$ décodées, le sous-module RI de reconstruction d'image fournit en sortie du décodeur DO, une image ID$_N$ correspondant au décodage de l'image I$_N$.

Description détaillée d'un premier mode de réalisation

Un premier mode de réalisation va maintenant être décrit dans le cas d'un procédé de codage/décodage en mode Intra.

Conformément à la norme H264/MPEG-AVC, plusieurs types de mode de codage/décodage Intra sont proposés selon la façon dont est partitionné un macrobloc courant. Dans le cas du codage Intra 16×16, le macrobloc est considéré comme une unique partition qui est prédite par rapport à un ensemble de quatre prédicteurs spatiaux. Dans le cas du codage Intra 8x8 ou 4x4, chaque bloc de plus petite taille est prédit par rapport à un ensemble de neuf prédicteurs spatiaux comprenant les quatre prédicteurs spatiaux utilisés dans le codage Intra 16×16.

Un tel codage/décodage Intra par compétition, tel que mis en œuvre dans la norme H264/MPEG-AVC, repose ainsi sur la mise en compétition des différents prédicteurs spatiaux précités, dans le but de sélectionner le meilleur prédicteur, c'est-à-dire le prédicteur qui optimisera le codage de la partition courante considérée selon un critère prédéterminé, par exemple le coût débit/distorsion.

De tels prédicteurs étant en grand nombre, le débit de l'information de compétition induit par ces multiples prédicteurs s'en trouve par là même augmenté. Ainsi, il est évité actuellement d'élargir la mise en compétition à de nouveaux prédicteurs Intra qui pourraient pourtant s'avérer optimiser la prédiction Intra.

L'invention propose d'appliquer les étapes de codage et de décodage telles que décrites ci-dessus dans le cadre d'un codage/décodage en mode Intra, sans se limiter particulièrement au nombre de prédicteurs spatiaux déjà envisagés dans la norme H264/MPEG-AVC, et en appliquant la mise en compétition au nombre de nouveaux prédicteurs Intra susceptibles d'être proposés dans le futur.

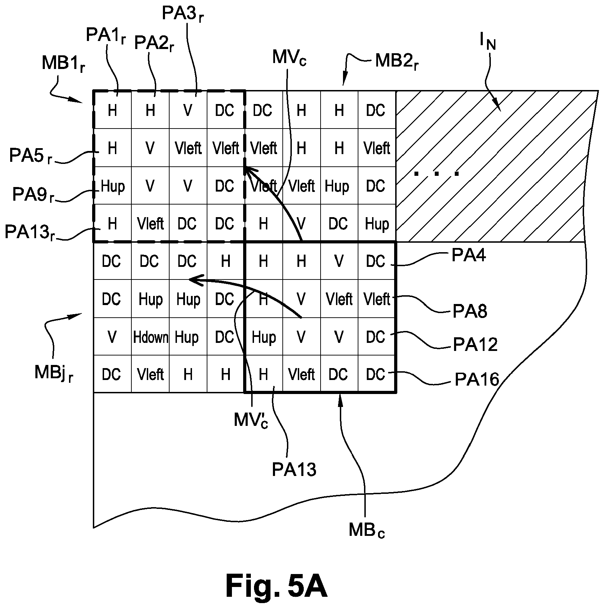

Comme dans l'exemple représenté sur la **figure 2,** le macrobloc courant MB$_c$ de l'image courante I$_N$ est découpé au cours de l'étape C1 précitée en seize partitions PA1, PA2,..., PA16. Lesdites partitions obtenues ont par exemple toutes la forme d'un bloc carré et sont toutes de même taille. Le macrobloc MB$_c$ ainsi découpé est représenté à la **figure 5A.** Dans un souci de clarté du dessin, seules les partitions PA4, PA8, PA12, PA13 et PA16 sont représentées.

Au cours d'une étape suivante qui regroupe les étapes C2 et C4 précitées telles que représentées à la **figure 1,** pour chacune des partitions PA1 à PA16, il est procédé à la sélection d'au moins un macrobloc causal contenant une pluralité K de partitions causales disponibles PA1$_r$, PA2$_r$,..., PAi$_r$,...PAK$_r$, (1≤i≤K).

Dans l'exemple représenté sur la **figure 5A,** une telle sélection est effectuée conformément à un critère de corrélation de modes de prédiction entre les partitions courantes à prédire du macrobloc courant MB$_c$ et les partitions causales d'un macrobloc causal faisant partie d'un nombre E de macroblocs causaux disponibles MB1$_r$, MB2$_r$,...,MB2$_r$,...MBj$_r$, où 1≤j≤E. Dans un souci de clarté du dessin, seuls les macroblocs causaux MB1$_r$, MB2$_r$ et MBj$_r$ sont représentés, les macroblocs causaux restants étant représentés schématiquement par des traits hachurés.

A cet effet, il est procédé :

- au calcul des prédicteurs spatiaux optimaux pour chacune des partitions du macrobloc courant MB$_c$ considéré,
- au calcul des prédicteurs spatiaux optimaux pour chacune des partitions d'un macrobloc causal considéré.

A l'issue du calcul, les prédicteurs spatiaux optimaux relatifs à chacune des partitions courantes PA1 à PA16 du macrobloc courant MB$_c$ sont respectivement H, H, V, DC, H, V, Vleft, Vleft, Hup, V, V, DC, H, Vleft, DC, DC.

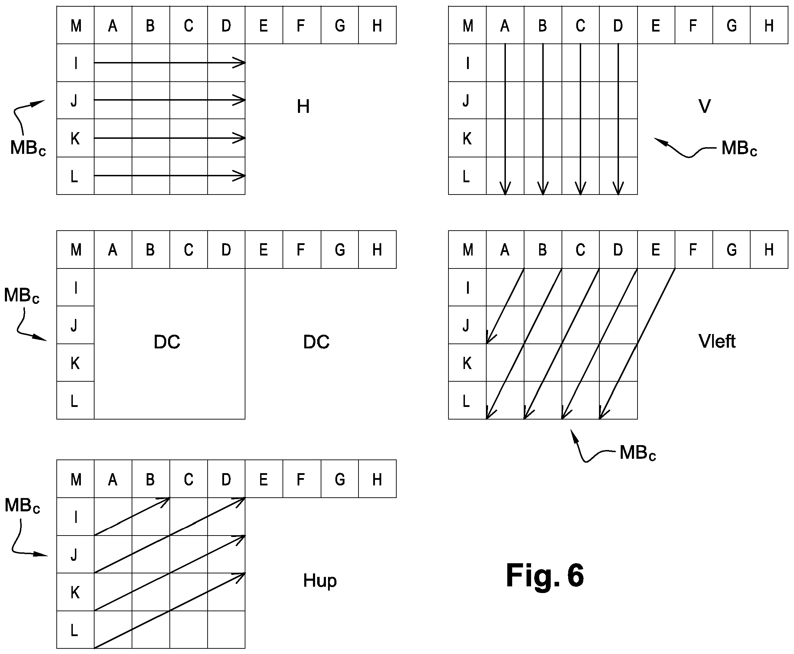

En référence à la **figure 6,** les prédicteurs de type H, V, DC, Vleft et Hup correspondent respectivement à cinq directions possibles, parmi les neuf directions de prédiction possibles en mode de codage Intra, par rapport auxquelles une partition courante peut être prédite par rapport à une partition causale contenue dans la même image. Ces cinq directions comprennent classiquement :

- la direction horizontale, notée H,
- la direction verticale, notée V,
- la direction constituée par la moyenne des deux directions précédentes, notée DC,
- une première direction diagonale, notée V left,
- une seconde direction diagonale, notée Hup.

Comme on peut le voir sur la **figure 5A,** le macrobloc causal pour lequel les prédicteurs spatiaux optimaux calculés sont les plus ressemblants à ceux calculés relativement au macrobloc courant $MB_c$ est le premier macrobloc causal $MB1_r$. C'est donc ce macrobloc causal $MB1_r$ qui est sélectionné.

Le macrobloc causal $MB1_r$ obtenu selon le critère de corrélation de modes est mieux choisi que dans le cas d'une mise en correspondance de blocs classique, puisqu'il est tenu compte de la corrélation entre le macrobloc courant $MB_c$ et les macroblocs causaux, prédicteur par prédicteur. En revanche, dans le cas d'une mise en correspondance classique par « block matching », les prédicteurs spatiaux du macrobloc causal sélectionné peuvent s'avérer différents des prédicteurs optimaux réellement calculés pour ledit macrobloc causal, ce qui nuit sensiblement à la finesse de la sélection de ce macrobloc causal.

Il est par ailleurs procédé à l'étape C3 précitée de calcul du vecteur de mouvement $MV_c$ entre le macrobloc courant $MB_c$ et le macrobloc causal $MB1_r$.

Chacune des partitions courantes PA1 à PA16 du macrobloc courant $MB_c$ est ensuite prédite au cours de l'étape C5 précitée, à l'aide des prédicteurs optimaux calculés respectivement pour chacune des partitions du macrobloc causal $MB1_r$.

Les étapes précitées C6 à C8 sont ensuite mises en œuvre de façon à coder le macrobloc courant $MB_c$.

Le signal de données F transmis au décodeur DO à l'issue de l'étape C8 contient éventuellement le vecteur mouvement $MV_C$ et les données résiduelles si elles existent. Par contre, le signal de données F ne contient avantageusement pas le et/ou les prédicteurs optimaux du et/ou des macroblocs causaux qui ont été calculés à l'étape C4 précitée, puisque ces prédicteurs sont associés à des macroblocs déjà codés puis décodés et de ce fait peuvent être déterminés indépendamment par le décodeur DO.

En référence à la **figure 4,** l'étape de décodage D1 précitée est ensuite appliquée au signal de données codé F de façon à décoder le vecteur mouvement $MV_C$ calculé à l'étape C3.

Le macrobloc causal $MB1_r$ pointé par le vecteur mouvement $MV_c$ est alors déterminé au cours de l'étape de décodage précitée D2.

Il est ensuite procédé au calcul des prédicteurs optimaux pour chacune des partitions du macrobloc causal $MB1_r$ par mise en œuvre de l'étape D3 précitée. Selon le premier mode de réalisation, il s'agit des prédicteurs spatiaux H, H, V, DC, H, V, Vleft, Vleft, Hup, V, V, DC, H, Vleft, DC, DC associés respectivement aux partitions $PA1_r$ à $PA16_r$ du macrobloc causal $MB1_r$.

Au cours de l'étape D4 précitée, le macrobloc courant $MB_c$ à reconstruire est prédit par rapport au macrobloc causal $MB1_r$, à l'aide des prédicteurs spatiaux optimaux H, H, V, DC, H, V, Vleft, Vleft, Hup, V, V, DC, H, Vleft, DC, DC.

A l'issue de cette étape, un macrobloc courant prédit $MBp_c$ est délivré.

Au cours de l'étape D5 précitée, le macrobloc courant prédit $MBp_c$ est alors reconstruit.

L'invention n'est bien sûr pas limitée au fait que le ou les macroblocs causaux soient systématiquement sélectionnés dans l'image courante $I_N$.

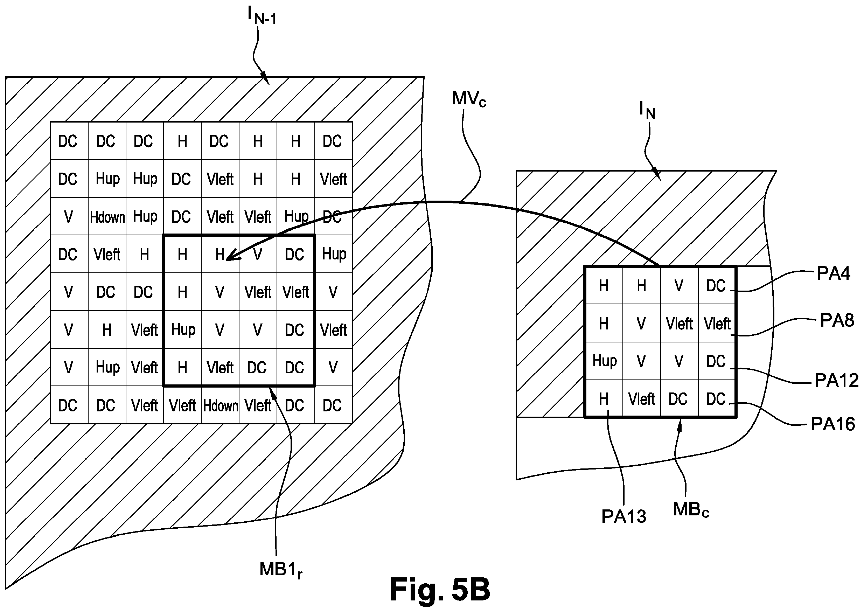

En référence à la **figure 5B** qui illustre une variante du mode de réalisation de la **figure 5A,** le macrobloc causal $MB1_r$ est localisé dans une image précédemment codée/décodée et non dans l'image courante $I_N$. Une telle image précédemment codée/décodée est par exemple l'image $I_{N-1}$ qui précède immédiatement l'image courante $I_N$.

Selon une telle variante, les étapes de codage/décodage décrites ci-dessus en référence à la **figure 5A** sont reproduites identiquement avec le macrobloc causal $MB1_r$ sélectionné dans l'image $I_{N-1}$ et, pour cette raison, ne seront pas décrites plus avant.

Description détaillée d'un deuxième mode de réalisation

Un deuxième mode de réalisation va maintenant être décrit dans le cas d'un procédé de codage/décodage dans lequel est appliquée une méthode itérative d'échantillonnage compressé (en anglais « compressed sensing »). Une telle méthode est classique et est par exemple décrite dans le document T.T. Do, Xiaoan Lu, and J. Sole. « Compressive sensing with adaptive pixel domain reconstruction for block-based video coding ». Proceedings of 2010 IEEE 17th International Conférence on Image Processing, pages 3377 -3380, 2010.

Cette méthode permet de supprimer plusieurs coefficients résiduels transformés et quantifiés puis de reconstruire la partition courante correspondante de façon performante. Pour être très efficace, une telle méthode nécessite cependant un grand nombre de paramètres. Le coût de signalisation réduit, tel qu'obtenu avantageusement par la méthode grâce à la suppression des coefficients précités, est ainsi augmenté de façon défavorable, en raison de l'obligation d'ajouter ce grand nombre de paramètres dans le signal de données à transmettre au décodeur. Une telle augmentation du coût nuit donc à l'intérêt d'une telle méthode.

Les paramètres utilisés par cette méthode sont :

- des paramètres de sous-échantillonnage,
- des opérateurs d'acquisition, tels que le type de transformée : DCT, ondelettes, etc...,
- des opérateurs de reconstruction,

- des paramètres utilisés par l'algorithme de reconstruction.

La présente invention permet avantageusement d'appliquer cette méthode itérative sans impact sur le coût de signalisation de tels paramètres, puisque ces derniers ne sont avantageusement pas transmis dans le signal de données à destination du décodeur.

Comme dans l'exemple représenté sur la **figure 2,** le macrobloc courant $MB_C$ de l'image courante $I_N$ est découpé au cours de l'étape C1 précitée en seize partitions PA1, PA2,..., PA16. Lesdites partitions obtenues ont par exemple toutes la forme d'un bloc carré et sont toutes de même taille. Le macrobloc $MB_c$ ainsi découpé est par exemple identique à celui représenté à la **figure 5A**.

Au cours de l'étape C2 précitée telle que représentée à la **figure 1**, pour chacune des partitions PA1 à PA16, il est procédé à la sélection d'au moins un macrobloc causal contenant une pluralité K de partitions causales disponibles $PA1_r$, $PA2_r$,..., $PAi_r$,...$PAK_r$, $(1 \le i \le K)$.

Dans l'exemple représenté, une telle sélection est effectuée conformément à un critère classique de mise en correspondance de blocs (en anglais « block matching »). Le macrobloc ainsi sélectionné est par exemple le macrobloc $MBj_r$ représenté sur la **figure 5A**.

En variante, une telle sélection est effectuée conformément à un critère de mise en correspondance par « block matching » modifié. Ce critère consiste à sélectionner le macrobloc causal dont les données résiduelles transformées sont les plus proches des données résiduelles transformées du macrobloc courant $MB_c$.

Au cours de l'étape C3 précitée telle que représentée **figure 1**, il est procédé au calcul du vecteur mouvement $MV'_c$ entre le macrobloc courant $MB_c$ et le macrobloc causal $MBj_r$. Le vecteur mouvement $MV'_c$ est représenté sur la **figure 5A.**

Au cours de l'étape C4 précitée telle que représentée **figure 1**, il est procédé au calcul d'un ou de plusieurs paramètres de codage optimaux relativement au macrobloc causal $MBj_r$.

A cet effet, il est procédé, pour chacune des partitions du macrobloc causal sélectionné $MBj_r$, à une mise en compétition, selon le critère débit-distorsion J ou J' précité, des coefficients de pondération, des paramètres de sous-échantillonnage, des opérateurs d'acquisition, des opérateurs de reconstruction ou d'une combinaison de ces éléments, de façon à déterminer au moins un paramètre de codage optimal parmi ces éléments.

A l'issue de l'étape C4, c'est par exemple un paramètre de sous-échantillonnage qui est considéré comme optimisant le codage de chacune des partitions causales du macrobloc causal sélectionné $MBj_r$.

Chacune des partitions courantes PA1 à PA16 du macrobloc courant $MB_c$ est ensuite prédite au cours de l'étape C5 précitée. A l'issue de cette étape, un macrobloc courant prédit $MBp_c$ est délivré.

Au cours de l'étape C6 précitée telle que représentée à la **figure** 1, il est procédé à la détermination des données résiduelles $a_1$, $a_2$, ...., $a_L$, par comparaison des données relatives au macrobloc courant $MB_c$ aux données relatives au marobloc courant prédit obtenu $MBp_c$.

Au cours de l'étape C7 précitée telle que représentée à la **figure** 1, les données résiduelles $a_1$, $a_2$, ...., $a_L$, sont transformées puis quantifiées de façon à obtenir des coefficients $C_1$, $C_2$, ...., $C_M$.

Conformément au deuxième mode de réalisation, à la suite de l'étape C7, certains seulement des coefficients $C_1$, $C_2$, ...., $C_M$ sont conservés suite à un sous-échantillonnage (non représenté) de ces derniers à l'aide dudit paramètre de sous-échantillonnage optimal déterminé à l'étape C4.

L'étape précitée C8 telle que représentée à la **figure** 1 est ensuite mise en œuvre de façon à coder le macrobloc courant $MB_c$.

Le signal de données F transmis au décodeur DO à l'issue de l'étape C8 contient éventuellement le vecteur mouvement $MV'_c$ si le décodeur DO n'est pas capable de le recalculer indépendamment et, selon le deuxième mode de réalisation, les données résiduelles calculées à l'étape C6. Par contre, le signal de données F ne contient avantageusement pas le paramètre de sous-échantillonnage qui a été déterminé à l'étape C4 précitée, puisque ce paramètre est associé au macrobloc causal $MBj_r$ déjà codé puis décodé et, de ce fait, peut être déterminé indépendamment par le décodeur DO.

En référence à la **figure 4,** l'étape de décodage D1 précitée est ensuite appliquée au signal de données codé F de façon à décoder le vecteur mouvement $MV'_c$ calculé à l'étape C3.

Le macrobloc causal $MBj_r$ pointé par le vecteur mouvement $MV'_c$ est alors déterminé au cours de l'étape de décodage précitée D2.

Il est ensuite procédé au calcul des paramètres de codage optimaux pour chacune des partitions du macrobloc causal $MBj_r$ par mise en œuvre de l'étape D3 précitée. Selon le deuxième mode de réalisation, cette étape de calcul délivre un paramètre de sous-échantillonnage optimal pour chacune des partitions causales du macrobloc causal $MBj_r$.

Au cours de l'étape D4 précitée, chacune des partitions courantes PA1 à PA16 du macrobloc courant $MB_c$ à reconstruire sont prédites de façon classique afin de délivrer un macrobloc courant prédit $MBp_c$.

Au cours de l'étape D5 précitée, le macrobloc courant prédit $MBp_c$ est alors reconstruit par addition au macrobloc courant prédit $MBp_c$, des données résiduelles transmises dans le signal de données F, et par sous-échantillonnage des coefficients $C_1$, $C_2$, ...., $C_M$, issus de la transformation et de la quantification desdites données résiduelles, à l'aide du paramètre de sous-échantillonnage optimal calculé à l'étape D3.

Description détaillée d'un troisième mode de réalisation

Un troisième mode de réalisation va maintenant être décrit dans le cas d'un procédé de codage/décodage auquel est appliquée une prédiction de type Intra ou Inter comme décrite dans le premier mode de réalisation et une méthode itérative d'échantillonnage compressé telle que décrite dans le deuxième mode de réalisation.

Un tel mode de réalisation permet ainsi d'obtenir au moins deux paramètres de codage optimaux issus respectivement de la mise en œuvre des premier et deuxième modes de réalisation. Une telle disposition permet de coder plus finement un macrobloc courant, puisque deux paramètres optimaux de type différents entrent en jeu, au lieu d'un seul.

On suppose que selon le premier mode de réalisation, la prédiction est de type Intra.

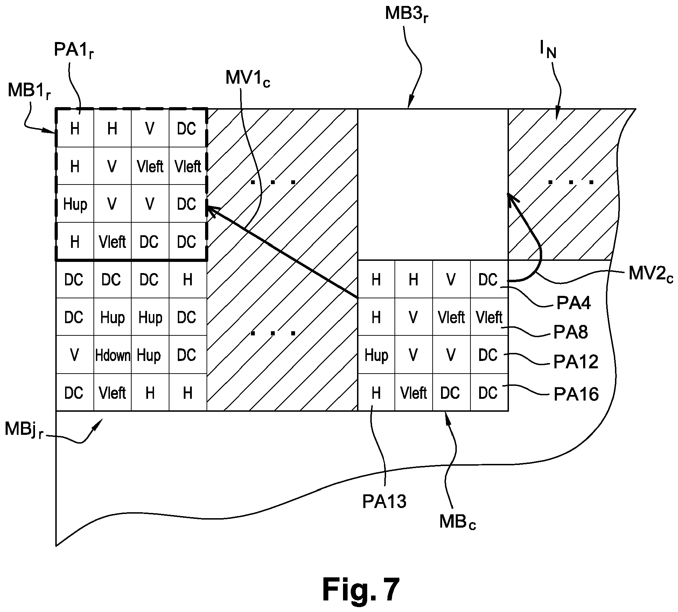

Comme dans l'exemple représenté sur la **figure 2**, le macrobloc courant $MB_c$ de l'image courante $I_N$ est découpé au cours de l'étape C1 précitée en seize partitions PA1, PA2,..., PA16. Lesdites partitions obtenues ont par exemple toutes la forme d'un bloc carré et sont toutes de même taille. Le macrobloc $MB_c$ ainsi découpé est représenté à la **figure** 7. Dans un souci de clarté du dessin, seules les partitions PA4, PA8, PA12, PA13 et PA16 sont représentées.

Comme dans le premier mode de réalisation, il est procédé, au cours des étapes C2 et C4, pour chacune des partitions PA1 à PA16 du macrobloc courant $MB_c$, à la sélection d'au moins un macrobloc causal contenant une pluralité K de partitions causales disponibles $PA1_r$, $PA2_r$,..., $PAi_r$...$PAK_r$, ($1 \leq i \leq K$).

Dans l'exemple représenté sur la **figure 7**, une telle sélection est effectuée de la même façon que dans le premier mode de réalisation, c'est-à-dire conformément à un critère de corrélation de modes de prédiction entre les partitions courantes à prédire du macrobloc courant $MB_c$ et les partitions causales d'un macrobloc causal faisant partie d'un nombre E de macroblocs causaux disponibles $MB1_r$, $MB2_r$,...,$MBj_r$...$MBE_r$, où $1 \leq j \leq E$. Dans un souci de clarté du dessin, seuls les macroblocs causaux $MB1_r$, $MB3_r$ et $MBj_r$ sont représentés, les macroblocs causaux restants étant représentés schématiquement par des traits hachurés.

A cet effet, il est donc procédé :

- au calcul des prédicteurs spatiaux optimaux pour chacune des partitions du macrobloc courant $MB_c$ considéré,
- au calcul des prédicteurs spatiaux optimaux pour chacune des partitions d'un macrobloc causal considéré.

A l'issue du calcul, les prédicteurs spatiaux optimaux relatifs à chacune des partitions courantes PA1 à PA16 du macrobloc courant $MB_c$ sont respectivement H, H, V, DC, H, V, Vleft, Vleft, Hup, V, V, DC, H, Vleft, DC, DC.

Comme on peut le voir sur la **figure 7**, le macrobloc causal pour lequel les prédicteurs spatiaux optimaux calculés sont les plus ressemblants à ceux calculés relativement au macrobloc courant $MB_c$ est le premier macrobloc causal $MB1_r$. C'est donc ce macrobloc causal $MB1_r$ qui est sélectionné.

Il est par ailleurs procédé à l'étape C3 précitée de calcul du vecteur de mouvement $MV1_c$ entre le macrobloc courant $MB_c$ et le macrobloc causal $MB1_r$.

Parallèlement, les étapes C2 à C4 telles que décrites ci-dessus en liaison avec le deuxième mode de réalisation sont mises en œuvre de façon à obtenir, pour un macrobloc causal considéré, des paramètres d'échantillonnage compressé optimaux.

Au cours de l'étape C2 précitée, pour chacune des partitions PA1 à PA16 du macrobloc courant $MB_c$, il est procédé à la sélection d'au moins un macrobloc causal contenant une pluralité K de partitions causales disponibles $PA1_r$, $PA2_r$,..., $PAi_r$,...$PAK_r$, ($1 \leq i \leq K$).

Dans l'exemple représenté sur la **figure 7**, une telle sélection est effectuée conformément à un critère de mise en correspondance de blocs classique (en anglais « block matching »). Le macrobloc causal sélectionné est par exemple le macrobloc $MB3_r$.

En variante, une telle sélection est effectuée conformément à un critère de mise en correspondance par « block matching » modifié.

Au cours de l'étape C3 précitée, il est procédé au calcul d'un vecteur mouvement $MV2_c$ entre le macrobloc courant $MB_c$ et le macrobloc causal $MB3_r$ qui vient d'être sélectionné à l'étape C2.

Au cours de l'étape C4, il est procédé au calcul d'un ou de plusieurs paramètres de codage optimaux relativement au macrobloc causal sélectionné $MB3_r$.

A cet effet, il est procédé, pour chacune des partitions du macrobloc causal sélectionné, à une mise en compétition, selon le critère débit-distorsion J ou J' précité, des coefficients de pondération, des paramètres de sous-échantillonnage, des opérateurs d'acquisition, des opérateurs de reconstruction ou d'une combinaison de ces éléments, de façon à déterminer au moins un paramètre de codage optimal parmi ces éléments.

A l'issue de l'étape C4, c'est par exemple un paramètre de sous-échantillonnage qui est considéré comme optimisant le codage du macrobloc causal sélectionné $MB3_r$.

Chacune des partitions courantes PA1 à PA16 du macrobloc courant $MB_c$ est ensuite prédite au cours de l'étape C5 précitée, à l'aide des prédicteurs otimaux calculés respectivement pour chacune des partitions du macrobloc causal $MB1_r$ et également par rapport à chacune des partitions du macrobloc causal $MB3_r$.

Au cours de l'étape C6 précitée, il est procédé à la détermination des données résiduelles $a_1$, $a_2$, ...., $a_L$, par comparaison des données relatives au macrobloc courant $MB_c$ aux données relatives au marobloc courant prédit obtenu $MBp_c$.

Au cours de l'étape C7 précitée, les données

résiduelles $a_1$, $a_2$, ...., $a_L$, sont transformées puis quantifiées de façon à obtenir des coefficients $C_1$, $C_2$, ...., $C_M$.

Conformément au troisième mode de réalisation, à la suite de l'étape C7, certains seulement des coefficients $C_1$, $C_2$, ...., $C_M$ sont conservés suite à un sous-échantillonnage (non représenté) de ces derniers à l'aide dudit paramètre de sous-échantillonnage optimal déterminé à l'étape C4.

L'étape précitée C8 est ensuite mise en œuvre de façon à coder le macrobloc courant $MB_c$.

Le signal de données F transmis au décodeur DO à l'issue de l'étape C8 contient éventuellement les vecteurs mouvement $MV1_C$ et $MV2_C$ calculés à l'étape C3 précitée, si le décodeur DO n'est pas capable de les recalculer indépendamment, ainsi que les données résiduelles calculées à l'étape C6. Par contre, le signal de données F ne contient avantageusement pas les prédicteurs spatiaux et le paramètre de sous-échantillonnage qui ont été déterminés à l'étape C4 précitée, puisque ces derniers sont associés aux macroblocs causaux $MB1_r$ et $MB3_r$ déjà codés puis décodés et, de ce fait, peuvent être déterminés indépendamment par le décodeur DO.

Au cours de l'étape de décodage D1 précitée, il est procédé au décodage des vecteurs mouvement $MV1_C$ et $MV2_C$ calculés à l'étape C3.

Les macroblocs causaux $MB1_r$ et $MB3_r$ pointés respectivement par les vecteurs mouvement $MV1_c$ et $MV2_c$ sont alors déterminés au cours de l'étape de décodage précitée D2.

Au cours de l'étape D3 précitée, il est ensuite procédé au calcul des prédicteurs optimaux H, H, V, DC, H, V, Vleft, Vleft, Hup, V, V, DC, H, Vleft, DC, DC associés respectivement aux partitions $PA1_r$ à $PA16_r$ du macrobloc causal $MB1_r$. Au cours de cette même étape, il est procédé au calcul du paramètre de sous-échantillonnage optimal pour chacune des partitions causales du macrobloc causal $MBj_r$.

Au cours de l'étape D4 précitée, le macrobloc courant $MB_c$ à reconstruire est prédit :

- d'une part par rapport au macrobloc causal $MB1_r$, à l'aide des prédicteurs spatiaux optimaux H, H, V, DC, H, V, Vleft, Vleft, Hup, V, V, DC, H, Vleft, DC, DC,
- et, dautre part, par rapport au macrobloc causal $MB3_r$.

A l'issue de cette étape, un macrobloc courant prédit $MBp_c$ est délivré.

Au cours de l'étape D5 précitée, le macrobloc courant prédit $MBp_c$ est alors reconstruit par addition, au macrobloc courant prédit $MBp_c$, des données résiduelles transmises dans le signal de données F, et par sous-échantillonnage des coefficients $C_1$, $C_2$, ...., $C_M$, issus de la transformation et de la quantification desdites données résiduelles, à l'aide du paramètre de sous-échantillonnage optimal calculé à l'étape D3.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de codage d'au moins une image ($I_N$) découpée en partitions (PA1, PA2, ... PAn), **caractérisé en ce qu'**il met en œuvre, pour une partition courante ($PA_c$) à coder, les étapes de:

   - sélection (C2) d'au moins une partition causale ($PAi_r$, $Pati_r$) déjà codée puis décodée lors d'un premier codage et décodage,
   - calcul (C4) d'au moins un paramètre de codage optimal de ladite au moins une partition causale sélectionnée, pour optimiser un critère de performance de codage prédéterminé d'un second codage de ladite au moins une partition causale sélectionnée, par mise en compétition d'une pluralité de paramètres de codage pour ledit second codage de ladite au moins une partition causale sélectionnée ;
   - codage (C8) de la partition courante à l'aide dudit au moins un paramètre de codage optimal de ladite au moins une partition causale sélectionnée calculé.

2. Procédé de codage selon la revendication 1, au cours duquel ladite étape de sélection de partition causale consiste à :

   - déterminer une pluralité de partitions causales,
   - calculer au moins un paramètre de codage optimal associé à chacune desdites partitions causales selon ledit critère de performance de codage prédéterminé,
   - calculer au moins un paramètre de codage optimal associé à ladite partition courante selon ledit critère de performance de codage prédéterminé,
   - comparer le paramètre de codage optimal calculé en association avec ladite partition courante avec chacun des paramètres de codage optimaux calculés respectivement en association avec chacune desdites partitions causales,
   - sélectionner la partition causale dont le paramètre de codage optimal a la valeur la plus proche de celle du paramètre de codage optimal de ladite partition courante.

3. Procédé de codage selon la revendication 1, au cours duquel ladite étape de sélection de partition causale consiste à :

   - déterminer une pluralité de partitions causales ;

- sélectionner la partition causale la plus proche de ladite partition courante par une mise en correspondance de blocs.

**4.** Procédé de codage selon l'une des revendications précédentes, au cours duquel ladite partition causale sélectionnée (Pati$_r$) est issue d'une transformation géométrique préalable, ledit procédé comprenant une étape de codage d'un indice associé à ladite transformation.

**5.** Dispositif (CO) de codage d'au moins une image découpée en partitions, **caractérisé en ce qu'**il comprend, pour une partition courante à coder :

- des moyens (APP_CO) de sélection d'au moins une partition causale déjà codée puis décodée lors d'un premier codage et décodage,
- des moyens (TR_CO) de traitement aptes à calculer au moins un paramètre de codage optimal pour optimiser un critère de performance de codage prédéterminé d'un second codage de ladite au moins une partition causale sélectionnée, par mise en compétition d'une pluralité de paramètres de codage pour ledit second codage de ladite au moins une partition causale sélectionnée ;
- des moyens (ENC) de codage de la partition courante à l'aide dudit au moins un paramètre de codage optimal de ladite au moins une partition causale sélectionnée calculé.

**6.** Programme d'ordinateur comportant des instructions pour mettre en œuvre le procédé de codage selon l'une quelconque des revendications 1 à 4, lorsqu'il est exécuté sur un ordinateur.

**7.** Support d'enregistrement lisible par un ordinateur sur lequel est enregistré un programme d'ordinateur comprenant des instructions pour l'exécution des étapes du procédé de codage selon l'une quelconque des revendications 1 à 4, lorsque ledit programme est exécuté par un ordinateur.

**8.** Procédé de décodage d'un signal de données représentatif d'au moins une image (I$_N$) découpée en partitions comprenant au moins une partition causale déjà codée puis décodée lors d'un premier codage et décodage, **caractérisé en ce qu'**il met en œuvre, pour au moins une partition courante à reconstruire dans ladite image, les étapes de :

- détermination (D2) d'au moins une partition causale à partir d'au moins un paramètre de mouvement associé à ladite partition courante à reconstruire ;
- mise en compétition (D32) d'une pluralité de paramètres de codage pour un second codage de ladite partition causale déterminée ;
- détermination (D33) d'au moins un paramètre de codage optimal pour optimiser un critère de performance de codage prédéterminé dudit second codage de ladite au moins une partition causale,
- reconstruction (D5) de ladite partition courante à l'aide dudit au moins un paramètre de codage optimal déterminé de ladite au moins une partition causale, lequel est utilisé en tant que paramètre de décodage de ladite partition courante.

**9.** Procédé de décodage selon la revendication 8, au cours duquel la détermination dudit paramètre de mouvement est effectuée par calcul ou bien par lecture de ce dernier dans ledit signal de données.

**10.** Procédé de décodage selon la revendication 8, au cours duquel la partition courante est reconstruite à l'aide d'au moins deux paramètres de codage optimaux de type différent qui sont utilisés en tant que paramètres de décodage de ladite partition courante.

**11.** Procédé de décodage selon la revendication 8, au cours duquel le critère de performance de codage est choisi parmi au moins un critère appartenant au groupe comprenant :

- un critère débit-distorsion, où le débit est calculé par simulation,
- un critère de distorsion.

**12.** Procédé de décodage selon la revendication 8, dans lequel ladite partition causale est issue d'une transformation géométrique préalable, ladite transformation étant déterminée par lecture dans ledit signal d'un indice relatif à ladite transformation géométrique.

**13.** Dispositif (DO) de décodage d'un signal de données représentatif d'au moins une image découpée en partitions comprenant au moins une partition causale déjà codée puis décodée lors d'un premier codage et décodage, **caractérisé en ce qu'**il comprend, pour au moins une partition courante à reconstruire dans ladite image :

- des moyens (CAL2_DO) de détermination d'au moins une partition causale à partir d'au moins un paramètre de mouvement associé à ladite partition courante à reconstruire ;
- des moyens (TEST_DO) de mise en compétition d'une pluralité de paramètres de codage pour un second codage de ladite partition causale déterminée ;
- des moyens (DCN_DO) de détermination d'au moins un paramètre de codage optimal pour optimiser un critère de performance de codage prédéterminé dudit second codage de ladite partition causale ;

- des moyens (RI) de reconstruction de ladite partition courante à l'aide dudit au moins un paramètre de codage optimal déterminé de ladite au moins une partition causale, lequel est utilisé en tant que paramètre de décodage de ladite partition courante.

14. Programme d'ordinateur comportant des instructions pour mettre en œuvre le procédé de décodage selon l'une quelconque des revendications 8 à 12, lorsqu'il est exécuté sur un ordinateur.

15. Support d'enregistrement lisible par un ordinateur sur lequel est enregistré un programme d'ordinateur comprenant des instructions pour l'exécution des étapes du procédé de décodage selon l'une quelconque des revendications 8 à 12, lorsque ledit programme est exécuté par un ordinateur.

**Patentansprüche**

1. Verfahren zum Codieren wenigstens eines in Partitionen (PA1, PA2, ... PAn) unterteilten Bildes ($I_N$), **dadurch gekennzeichnet, dass** es für eine zu codierende aktuelle Partition ($PA_c$) die folgenden Schritte umfasst:

   - Auswählen (C2) wenigstens einer kausalen Partition ($PAi_r$, $Pati_r$), die während einer ersten Codierung und Decodierung bereits codiert und dann decodiert worden ist,
   - Berechnen (C4) wenigstens eines optimalen Codierungsparameters der wenigstens einen ausgewählten kausalen Partition, um ein vorgegebenes Codierungsleistungskriterium einer zweiten Codierung der wenigstens einen ausgewählten kausalen Partition durch Bringen mehrerer Codierungsparameter für die zweite Codierung der wenigstens einen ausgewählten kausalen Partition in Konkurrenz zu optimieren;
   - Codieren (C8) der aktuellen Partition mithilfe des wenigstens einen berechneten optimalen Codierungsparameters der wenigstens einen ausgewählten kausalen Partition.

2. Codierungsverfahren nach Anspruch 1, wobei der Schritt des Auswählens der kausalen Partition Folgendes umfasst:

   - Bestimmen mehrerer kausaler Partitionen,
   - Berechnen wenigstens eines optimalen Codierungsparameters, der jeder der kausalen Partitionen zugeordnet ist, in Übereinstimmung mit dem vorgegebenen Codierungsleistungskriterium,
   - Berechnen wenigstens eines optimalen Codierungsparameters, der der aktuellen Partition zugeordnet ist, in Übereinstimmung mit dem vorgegebenen Codierungsleistungskriterium,
   - Vergleichen des berechneten optimalen Codierungsparameters, der der aktuellen Partition zugeordnet ist, mit jedem der berechneten optimalen Codierungsparameter, die jeweils einer der kausalen Partitionen zugeordnet sind,
   - Auswählen der kausalen Partition, deren optimaler Codierungsparameter einen Wert hat, der am nächsten bei jenem des optimalen Codierungsparameters der aktuellen Partition liegt.

3. Codierungsverfahren nach Anspruch 1, wobei der Schritt des Auswählens der kausalen Partition Folgendes umfasst:

   - Bestimmen mehrerer kausaler Partitionen;
   - Auswählen der kausalen Partition, die am nächsten bei der aktuellen Partition liegt, durch Herstellen einer Entsprechung zwischen Blöcken.

4. Codierungsverfahren nach einem der vorhergehenden Ansprüche, wobei die ausgewählte kausale Partition ($Pati_r$) von einer vorhergehenden geometrischen Transformation stammt, wobei das Verfahren einen Schritt des Codierens eines Indexes der Transformation umfasst.

5. Vorrichtung (CO) zum Codieren wenigstens eines in Partitionen unterteilten Bildes, **dadurch gekennzeichnet, dass** sie für eine zu codierende aktuelle Partition Folgendes umfasst:

   - Mittel (APP_CO) zum Auswählen wenigstens einer in einer ersten Codierung und Decodierung bereits codierten und dann decodierten kausalen Partition,
   - Verarbeitungsmittel (TR_CO), die wenigstens einen optimalen Codierungsparameter berechnen können, um ein vorgegebenes Codierungsleistungskriterium einer zweiten Codierung der wenigstens einen ausgewählten kausalen Partition durch Bringen mehrerer Codierungsparameter für die zweite Codierung der wenigstens einen ausgewählten kausalen Partition in Konkurrenz zu optimieren;
   - Mittel (ENC) zum Codieren der aktuellen Partition mithilfe des wenigstens einen berechneten optimalen Codierungsparameters der wenigstens einen ausgewählten kausalen Partition.

6. Computerprogramm, das Befehle enthält, um das Codierungsverfahren nach einem der Ansprüche 1 bis 4 auszuführen, wenn es in einem Computer ausgeführt wird.

**7.** Computerlesbarer Aufzeichnungsträger, auf dem ein Computerprogramm aufgezeichnet ist, das Befehle enthält, um die Schritte des Codierungsverfahrens nach einem der Ansprüche 1 bis 4 auszuführen, wenn das Programm durch einen Computer ausgeführt wird.

**8.** Verfahren zum Decodieren eines Datensignals, das wenigstens ein in Partitionen unterteiltes Bild ($I_N$) darstellt, das wenigstens eine kausale Partition enthält, die in einer ersten Codierung und Decodierung bereits codiert und dann decodiert worden ist, **dadurch gekennzeichnet, dass** es für wenigstens eine in dem Bild zu rekonstruierende aktuelle Partition die folgenden Schritte umfasst:

- Bestimmen (D2) wenigstens einer kausalen Partition anhand wenigstens eines Bewegungsparameters, der der zu rekonstruierenden aktuellen Partition zugeordnet ist;
- Bringen (D32) mehrerer Codierungsparameters für eine zweite Codierung der bestimmten kausalen Partition in Konkurrenz;
- Bestimmen (D33) wenigstens eines optimalen Codierungsparameters, um ein vorgegebenes Codierungsleistungskriterium der zweiten Codierung der wenigstens einen kausalen Partition zu optimieren,
- Rekonstruieren (D5) der aktuellen Partition mithilfe wenigstens eines bestimmten optimalen Codierungsparameters der wenigstens einen kausalen Partition, der als Parameter für die Decodierung der aktuellen Partition verwendet wird.

**9.** Decodierungsverfahren nach Anspruch 8, wobei das Bestimmen des Bewegungsparameters durch Berechnen oder durch Lesen dieses Letzteren in dem Datensignal ausgeführt wird.

**10.** Decodierungsverfahren nach Anspruch 8, wobei die aktuelle Partition mithilfe wenigstens zweier optimaler Codierungsparameter unterschiedlichen Typs rekonstruiert wird, die als Parameter für die Decodierung der aktuellen Partition verwendet werden.

**11.** Decodierungsverfahren nach Anspruch 8, wobei das Codierungsleistungskriterium aus wenigstens einem Kriterium gewählt wird, das zu der Gruppe gehört, die Folgendes enthält:

- ein Durchsatz-Verzerrungs-Kriterium, in dem der Durchsatz durch Simulation berechnet wird,
- ein Verzerrungskriterium.

**12.** Decodierungsverfahren nach Anspruch 8, wobei die kausale Partition von einer vorherigen geometrischen Transformation stammt, wobei die Transformation durch Lesen des Signals eines Indexes, der auf die geometrische Transformation bezogen ist, bestimmt wird.

**13.** Vorrichtung (DO) zum Decodieren eines Datensignals, das wenigstens ein in Partitionen unterteiltes Bild darstellt, das wenigstens eine kausale Partition enthält, die in einer ersten Codierung und Decodierung bereits codiert und dann decodiert worden ist, **dadurch gekennzeichnet, dass** sie für wenigstens eine in dem Bild zu rekonstruierende aktuelle Partition Folgendes umfasst:

- Mittel (CAL2_DO) zum Bestimmen wenigstens einer kausalen Partition anhand wenigstens eines Bewegungsparameters, der der zu rekonstruierenden aktuellen Partition zugeordnet ist;
- Mittel (TEST_DO) zum Bringen mehrerer Codierungsparameter für eine zweite Codierung der bestimmten kausalen Partition in Konkurrenz;
- Mittel (DCN_DO) zum Bestimmen wenigstens eines optimalen Codierungsparameters, um ein vorgegebenes Codierungsleistungskriterium der zweiten Codierung der kausalen Partition zu optimieren;
- Mittel (RI) zum Rekonstruieren der aktuellen Partition mithilfe wenigstens eines bestimmten optimalen Codierungsparameters der wenigstens einen kausalen Partition, der als Parameter zum Decodieren der aktuellen Partition verwendet wird.

**14.** Computerprogramm, das Befehle enthält, um das Decodierungsverfahren nach einem der Ansprüche 8 bis 12 auszuführen, wenn es in einem Computer ausgeführt wird.

**15.** Computerlesbarer Aufzeichnungsträger, auf dem ein Computerprogramm aufgezeichnet ist, das Befehle zum Ausführen der Schritte des Decodierungsverfahren nach einem der Ansprüche 8 bis 12 enthält, wenn das Programm durch einen Computer ausgeführt wird.

**Claims**

**1.** Method for encoding at least one image ($I_N$) divided into partitions (PA1, PA2, ..., PAn), **characterized in that** it implements, for a current partition ($PA_c$) to be encoded, steps of:

- selecting (C2) at least one causal partition ($PAi_r$, $Pati_r$) already coded then decoded in a first encoding and decoding operation,

- computing (C4) at least one optimal encoding parameter of said at least one selected causal partition, in order to optimise a predetermined encoding-performance criterion of a second operation of encoding said at least one selected causal partition, via competition between a plurality of encoding parameters for said second operation of encoding said at least one selected causal partition;
- encoding (C8) the current partition using said at least one computed optimal encoding parameter of said at least one selected causal partition.

2. Encoding method according to Claim 1, wherein said causal-partition-selecting step consists in:

- determining a plurality of causal partitions,
- computing at least one optimal encoding parameter associated with each of said causal partitions according to said predetermined encoding-performance criterion,
- computing at least one optimal encoding parameter associated with said current partition according to said predetermined encoding-performance criterion,
- comparing the optimal encoding parameter computed in association with said current partition with each of the optimal encoding parameters respectively computed in association with each of said causal partitions,
- selecting the causal partition the optimal encoding parameter of which has the value closest to the value of the optimal encoding parameter of said current partition.

3. Encoding method according to Claim 1, wherein said causal-partition-selecting step consists in:

- determining a plurality of causal partitions;
- selecting the causal partition closest said current partition by correlating blocks.

4. Encoding method according to one of the preceding claims, wherein said selected causal partition (Pati$_r$) results from a prior geometric transformation, said method comprising a step of encoding an index associated with said transformation.

5. Device (CO) for encoding at least one image divided into partitions, **characterized in that** it comprises, for a current partition to be encoded:

- means (APP_CO) for selecting at least one causal partition already encoded then decoded in a first encoding and decoding operation,
- processing means (TR_CO) able to compute at least one optimal encoding parameter in order to optimise a predetermined encoding-performance criterion of a second operation of encoding said at least one selected causal partition, via competition between a plurality of encoding parameters for said second operation of encoding said at least one selected causal partition;
- means (ENC) for encoding the current partition using said at least one computed optimal encoding parameter of said at least one selected causal partition.

6. Computer program comprising instructions for implementing the encoding method according to any one of Claims 1 to 4, when it is executed on a computer.

7. Computer-readable storage medium on which is stored a computer program comprising instructions for executing the steps of the encoding method according to any one of Claims 1 to 4, when said program is executed by a computer.

8. Method for decoding a data signal representing at least one image (I$_N$) divided into partitions comprising at least one causal partition already encoded then decoded in a first encoding and decoding operation, **characterized in that** it implements, for at least one current partition to be reconstructed in said image, steps of:

- determining (D2) at least one causal partition from at least one motion parameter associated with said current partition to be reconstructed;
- making a plurality of encoding parameters compete (D32) with respect to a second operation of encoding said determined causal partition;
- determining (D33) at least one optimal encoding parameter in order to optimise a predetermined encoding-performance criterion of said second operation of encoding said at least one causal partition,
- reconstructing (D5) said current partition using said at least one determined optimal encoding parameter of said at least one causal partition, which parameter is used as decoding parameter of said current partition.

9. Decoding method according to Claim 8, wherein said motion parameter is determined by computation or indeed by reading it from said data signal.

10. Decoding method according to Claim 8, wherein the current partition is reconstructed using at least two optimal encoding parameters of different type that are used as decoding parameters of said current partition.

11. Decoding method according to Claim 8, wherein the encoding performance criterion is selected from at least one criterion belonging to the group comprising:

- a rate-distortion criterion, where the rate is calculated by simulation,
- a distortion criterion.

12. Decoding method according to Claim 8, wherein said causal partition results from a prior geometric transformation, said transformation being determined by reading, from said signal, an index relating to said geometric transformation.

13. Device (DO) for decoding a data signal representing at least one image divided into partitions comprising at least one causal partition already encoded then decoded in a first encoding and decoding operation, **characterized in that** it comprises, for at least one current partition to be reconstructed in said image:

- means (CAL2_DO) for determining at least one causal partition from at least one motion parameter associated with said current partition to be reconstructed;
- means (TEST_DO) for making a plurality of encoding parameters compete with respect to a second operation of encoding said determined causal partition;
- means (DCN_DO) for determining at least one optimal encoding parameter in order to optimise a predetermined encoding-performance criterion of said second operation of encoding said causal partition;
- means (RI) for reconstructing said current partition using said at least one determined optimal encoding parameter of said at least one causal partition, which parameter is used as decoding parameter of said current partition.

14. Computer program comprising instructions for implementing the decoding method according to any one of Claims 8 to 12, when it is executed on a computer.

15. Computer-readable storage medium on which is stored a computer program comprising instructions for executing the steps of the decoding method according to any one of Claims 8 to 12, when said program is executed by a computer.

**Fig. 1**

**Fig. 2**

Fig. 3

**Fig. 4**

**Fig. 5A**

Fig. 5B

Fig. 6

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.-M. THIESSE ; J. JUNG ; M. ANTONINI.** Data Hiding of motion informations in chroma and luma samples. *ICIP, Hong Kong,* Septembre 2010
- **JINGJING DAI ; AU, O.C. ; WEN YANG ; CHAO PANG ; FENG ZOU ; YU LIU.** Motion vector coding based on predictor selection and boundary-matching estimation. *Multimedia Signal Processing, 2009-MMSP '09,* 05 Octobre 2009, 1-5
- **LAROCHE, G. ; JUNG, J. ; PESQUET-POPESCU, B.** Intra Coding with Prediction Mode Information Inference. *Circuits and Systems for Video Technology, IEEE Transactions on circuits and systems for video technology,* Décembre 2010, vol. 20 (12), 1786-1796

- Localized Weighted Prédiction for Video Coding. **PENG YIN et al.** Conférence Proceedings / IEEE International Symposium on Circuits and Systems (ISCAS). IEEE Service Center, 23 Mai 2005, 4365-4368
- **G.J. SULLIVAN ; T.WIEGAND.** Rate-distortion optimization for video compression. *IEEE Signal Proc. Mag.,* 1998, 74-90
- **T.T. DO ; XIAOAN LU ; J. SOLE.** Compressive sensing with adaptive pixel domain reconstruction for block-based video coding. *Proceedings of 2010 IEEE 17th International Conférence on Image Processing,* 2010, 3377-3380